# EUROPÄISCHE PATENTSCHRIFT

(11) **EP 3 836 290 B1**
(45) Veröffentlichungstag und Bekanntmachung des Hinweises auf die Patenterteilung: **02.03.2022**
(21) Anmeldenummer: 20211220.7
(22) Anmeldetag: 02.12.2020
(51) Int. Cl.: H01M 10/54

(54) **VERFAHREN ZUM AUFSCHLIESSEN VON ELEKTRO-CHEMISCHEN ENERGIESPEICHERN SOWIE THERMISCHE BEHANDLUNGSANLAGE**
METHOD FOR DECOMPOSITION OF ELECTROCHEMICAL STORAGE DEVICES AND THERMAL TREATMENT DEVICE
PROCÉDÉ DE DÉCOMPOSITION DE DISPOSITIFS DE STOCKAGE D'ENERGIE ÉLÉCTROCHIMIQUE ET DISPOSITIF DE TRAÎTEMENT THERMIQUE

(30) Priorität: 11.12.2019 DE 102019133927
(43) Veröffentlichungstag der Anmeldung: 16.06.2021
(73) Patentinhaber: Accurec Recycling GmbH, 47809 Krefeld (DE)
(72) Erfinder: Sojka, Reiner, 40545 Düsseldorf (DE); Melber, Albrecht, 64287 Darmstadt (DE)
(74) Vertreter: Haverkamp Patentanwälte PartG mbB

(56) Entgegenhaltungen:
- US-A- 5 735 933
- US-A1- 2019 260 101

## Beschreibung

Die Erfindung betrifft ein Verfahren zum Aufschließen von elektro-chemischen Energiespeichern im Zusammenhang mit einem anschließenden Zurückgewinnen von darin enthaltenen Wertsoffen als Sekundärrohstoffe, bei welchem Verfahren die Energiespeicher durch eine thermische Behandlung in einer Unterdruckumgebung in einer Prozesskammer zum Entfernen des Elektrolyten und reaktiver Substanzen aufgeschlossen werden, bevor in einem nachgeschalteten Prozess das thermisch behandelte Material einer Aufbereitung unterworfen wird, durch die in dem thermisch behandelten Material befindliche Sekundärrohstoffe voneinander getrennt werden.

Elektro-chemische Energiespeicher sind wiederaufladbare Batterien, wie etwa Lithium-Ionen-Akkumulatoren, Nickel-Metallhydrid-Akkumulatoren und Elektrolytkondensatoren. Derartige Energiespeicher, insbesondere Lithium-Ionen-Akkumulatoren werden als sogenannte Stand-alone-Batterien, jedoch in größerem Umfange auch in Form von Batteriemodulen zum Betreiben elektrischer Verbraucher, wie mobile Computer, Mobiltelefone, Powertools und in zunehmendem Maße auch im Zusammenhang mit der Elektromobilität, insbesondere in Bezug auf Kraftfahrzeuge verwendet. Die elektro-chemischen Energiespeicher, die für Kraftfahrzeuge eingesetzt werden, müssen eine hohe Speicherdichte aufweisen und die erforderliche Leistung bevorraten können. Bei diesen Energiespeichern handelt es sich in vielen Fällen um Hochvoltbatterien.

Der weltweit zu beobachtende zunehmende Einsatz derartiger elektro-chemischer Energiespeicher, vor allem im Zusammenhang mit der zunehmenden Elektromobilität, führt zu einem wachsenden Aufkommen an ausgedienten Energiespeichern, sogenannten End-of-Life-Batterien bzw. -Batteriemodulen. Die zum Befriedigen der erhöhten Nachfrage höheren Produktionsraten haben zur Folge, dass auch der Produktionsausschuss von der Menge her zunimmt. Zudem sind die natürlichen Ressourcen, aus denen die für die Herstellung derartiger Energiespeicher benötigten Elemente gewonnen werden, begrenzt. Vor diesem Hintergrund sind verschiedene Ansätze vorgeschlagen worden, aus den nicht mehr verwendbaren elektro-chemischen Energiespeichern - und zwar sowohl End-of-Life-Batterien bzw. -Batteriemodule ebenso wie Produktionsausschuss - die darin enthaltenen Rohstoffe als Sekundärrohstoffe zurückzugewinnen. Damit sich ein solches Verfahren am Markt etablieren kann, muss dieses beherrschbar und mit vertretbaren Kosten durchführbar sein. Zudem muss ein solches Verfahren geeignet sein, dass mit diesem auch größere Mengen, mehrere 1.000 t pro Jahr behandelt werden können.

Nicht unproblematisch ist bei derartigen elektro-chemischen Energiespeichern, insbesondere wenn es sich hierbei um Lithium-Ionen-Akkumulatoren handelt, die thermische Reaktivität. Beschädigungen eines solchen Energiespeichers können leicht zu einem Entzünden derselben führen. Bauartbedingt können derartige Energiespeicher eine relativ hohe Restladung enthalten. Damit nachfolgende Zerkleinerungsschritte gefahrlos durchgeführt werden können, müssen die elektro-chemischen Energiespeicher durch Entladen zunächst inaktiviert werden. Dies erfolgt durch einen aktiv herbeigeführten Entladungsprozess. Zu diesem Zweck werden die Energiespeicher beispielsweise in eine Entladeflüssigkeit oder in ein Entladegranulat gelegt. Um eine Entladung in Entladeflüssigkeit zu gewährleisten, müssen die Energiespeicher zuvor mechanisch geöffnet werden, damit die Entladeflüssigkeit in das Gehäuse eindringen kann, da die Batterie- bzw. Batteriemodulkontakte in der Entladeflüssigkeit oxidieren und bereits nach kurzer Zeit den gewünschten Entladeprozess unterbinden. Bekannt ist auch, die thermische Reaktivität der Energiespeicher im Zusammenhang mit einer thermischen Behandlung derselben zu nutzen. Auf diese Weise kann zumindest ein Teil der für eine thermische (pyrolytische) Behandlung der Energiespeicher erforderliche Energie aus diesen bezogen werden.

Zur thermischen Behandlung von elektro-chemischen Energiespeichern kann ein Vakuumofen eingesetzt werden, in dem der thermische Aufschluss erfolgt. Dieser wird über die gesamte thermische Behandlungsdauer auf einem gleichbleibendem niedrigen Druck von weniger als 10 mbar gehalten. Die aus der beheizten Prozesskammer abgezogenen Gase werden einer Prozessabgasaufbereitung zum Reinigen der Prozessabgase zugeführt.

Problematisch bei einem solchen thermischen Aufschluss von elektro-chemischen Energiespeichern, insbesondere von Lithium-Ionen-Akkumulatoren ist, dass durch die Restentladung die Temperatur in der Prozesskammer in sehr kurzer Zeit sehr stark ansteigen kann. Hierbei können Temperaturen erreicht werden, bei denen zurückzugewinnende Sekundärrohstoffe, wie beispielsweise Aluminiumbestandteile aufschmelzen. Dieses ist nicht erwünscht, da hierdurch die nachgeschaltete Aufbereitung zum Zurückgewinnen der Sekundärrohstoffe erschwert wird. Um die Betriebssicherheit zu gewährleisten, ist ein solcher Vakuumofen mit Sicherheitssystemen ausgerüstet. Dieses umfasst in erster Linie eine Überwachung des Druckes in der Prozesskammer. Dieser darf einen vorgegebenen Wert nicht überschreiten. Man ist bestrebt, den Innendruck in der Prozesskammer unter 80 mbar zu halten. Zu diesem Sicherheitskonzept gehört, dass bei Erreichen eines vorgegebenen Innendruckes in der Prozesskammer, beispielsweise 65 mbar, eine weitere Beheizung deaktiviert wird. Bei Überschreiten eines zweiten Druckes, der etwas oberhalb des ersten Druckes liegt, bei der die Heizung deaktiviert wird, wird die Prozesskammer gekühlt. Dies erfolgt beispielsweise bei einem in der Prozesskammer festgestellten Druck von etwa 80 mbar. Bei Erreichen eines höheren Druckes innerhalb der Prozesskammer wird auf einen Ausfall der Vakuumpumpe geschlossen und eine Notpumpe betrieben. Eine thermische Behandlungsanlage dieser Art ist aus "Demonstrationsanlage für ein kostenneutrales, ressourceneffizientes Processing ausgedienter Li-Ionen-Batterien der Elektromobilität" - Abschlussbericht zum Verbundvorhaben EcoBatRec bekannt. Ein ähnliches Verfahren ist aus CN 109193058 A bekannt.

US 5 735 933 A offenbart ein Verfahren zum Aufschließen von elektrochemischen Energiespeichern. Diese werden ohne vorherigen mechanischen Aufschluss thermisch behandelt. In einen Vakuumofen werden die Energiespeicher zunächst auf eine Temperatur zwischen 100°C und 160°C erwärmt. Zudem wird ein Vakuum in dem Ofen erzeugt. Nach dem Vorheizen erfolgt ein schrittweises Erwärmen der Energiespeicher auf vorgegebene Temperaturstufen. Mit dem Erreichen jeder dieser Temperaturstufen werden die im Ofen entstandene Gase abgesaugt. Zur Vermeidung einer Oxidation von in den Energiespeichern enthaltenen Metallen wird vorgeschlagen, in den Ofen einreduzierendes Gas, beispielsweise Wasserstoff einzuleiten.

Auch wenn ein thermischer Aufschluss von elektro-chemischen Energiespeichern, insbesondere Lithium-Ionen-Akkumulatoren, in einem solchen Vakuumofen grundsätzlich zufriedenstellend vorgenommen werden kann, bevor die thermisch aufgeschlossenen Energiespeicher einer Aufbereitung zum Separieren der zu recycelnden Sekundärrohstoffe zugeführt werden, wäre es wünschenswert, wenn das Aufschlussverfahren, vor allem hinsichtlich seiner Prozessökonomie, verbessert werden könnte.

Daher liegt der Erfindung ausgehend von dem vorstehend gewürdigten Stand der Technik die Aufgabe zugrunde, den Prozess des Aufschließens von elektro-chemischen Energiespeichern, insbesondere von Lithium-Ionen-Akkumulatoren, in einer Unterdruckprozesskammer vor allem im Hinblick auf eine Verbesserung der Prozessökonomie weiterzubilden.

Gelöst wird diese Aufgabe erfindungsgemäß durch ein eingangs genanntes, gattungsgemäßes Verfahren, bei dem nach Einbringen einer Charge an thermisch aufzuschließenden Energiespeichern in die Prozesskammer in einem ersten Prozessschritt die Prozesskammer bei gleichzeitigem Erwärmen der Energiespeicher auf ein erstes Temperaturniveau soweit evakuiert wird, dass in den Energiespeichern enthaltene Elektrolyte verdampfen und in Folge des entstehenden Dampfdruckes die Energiespeicher geöffnet werden, wobei entstehende, Elektrolyte in Dampfphase enthaltene Prozessgase aus der Prozesskammer abgezogen werden, und dass im Anschluss an den ersten Prozessschritt die Energiespeicher für den weiteren Aufschluss bei gleichzeitigem Druckanstieg in der Prozesskammer in reduzierender Atmosphäre auf ein zweites Temperaturniveau erwärmt werden, bevor die Prozesskammer belüftet, gekühlt und die aufgeschlossenen Energiespeicher entnommen werden, wobei der Druckanstieg in der Prozesskammer während des zweiten Prozessschrittes kontrolliert wird, damit dieser kontinuierlich ansteigt.

Gelöst wird diese Aufgabe auch durch eine thermische Behandlungsanlage mit den Merkmalen des Anspruchs 12.

Bei dem erfindungsgemäßen Verfahren zum thermischen Aufschließen von elektro-chemischen Energiespeichern, insbesondere Lithium-Ionen-Akkumulatoren, wird nach einem ersten Prozessschritt, bei dem die in den Energiespeichern enthaltenen Elektrolyte in Dampfphase gebracht worden sind und bei dem infolge des Dampfdruckes die Energiespeicher geöffnet worden sind, - in Abkehr von der eingangs zum Stand der Technik wiedergegeben herrschenden Lehre - in dem anschließenden zweiten Prozessschritt ein Druckanstieg in der Prozesskammer vorgenommen. Der Druckanstieg kann in dem zweiten Prozessschritt bis auf atmosphärischen Druck erfolgen. In jedem Fall wird in diesem zweiten Prozessschritt für einen Druckanstieg gesorgt, bei dem der Druck in der Prozesskammer zumindest 300 bis 400 mbar überschreitet. In dem Ausführungsbeispiel ist vorgesehen, dass der Druck in der Prozesskammer während des Vorgangs des thermischen Aufschließens der Energiespeicher 600 bis 700 mbar nicht überschreitet, bevor die Prozesskammer bzw. die darin befindlichen Energiespeicher abgekühlt, die Prozesskammer belüftet und anschließend zur Entnahme der thermisch aufgeschlossenen Energiespeicher geöffnet wird. Erreicht wird mit dieser Druckerhöhung in der Prozesskammer während des thermischen Aufschließens der Energiespeicher, dass sich innerhalb der Prozesskammer und damit in der Umgebung, in der sich die thermisch aufzuschließenden Energiespeicher befinden, eine Atmosphäre ausbildet. Es hat sich überraschend gezeigt, dass durch eine solche Druckerhöhung im zweiten Prozessschritt bei dem thermischen Aufschlussverfahren die Prozessdauer für den thermischen Aufschluss signifikant reduziert werden kann. Zurückgeführt wird dieses auf die dann in der Prozesskammer befindliche Atmosphäre, die sodann eine gegenseitige thermische Beeinflussung durch Wärmeübertragung bewirkt. Unterstützt wird dieser Prozess zusätzlich durch die damit einhergehende, die Prozessgase umwälzende Konvektion. Die durch die Erwärmung erzeugte Umwälzung (Konvektion) begünstigt den Erwärmungsprozess in Bezug auf eine Verkürzung der erforderlichen Prozesszeit nochmals. In diesem zweiten Prozessschritt werden die Energiespeicher aufgrund der Zersetzung der Separatoren infolge der damit einhergehenden Kurzschlüsse restentladen. Dieses läuft als exotherme Reaktion ab, und zwar in jedem Energiespeicher mit einer unterschiedlichen Wärmeausbeute aufgrund unterschiedlicher Bauart und/oder unterschiedlicher darin enthaltener Restladung.

Durch die zwischen den einzelnen Energiespeichern befindliche Atmosphäre wird der Erwärmungsprozess innerhalb einer Charge aufzuschließender Energiespeicher vergleichmäßigt. Dieses wirkt sich sowohl in Bezug auf eine Erwärmung derjenigen Energiespeicher aus, deren exotherme Restentladung weniger Wärme liefert. Zugleich bedingt das Vorhandensein der Atmosphäre eine Kühlung derjenigen Energiespeicher, die ohne atmosphärische Umgebung aufgrund ihrer Bauart und/oder ihrer Restladung ansonsten sehr heftig reagieren. Somit erfolgt durch die Maßnahme des Druckanstieges in dem zweiten Prozessschritt zugleich eine Kontrolle der Prozesstemperatur. Insbesondere werden Temperaturspitzen auch in einzelnen Energiespeichern unterdrückt.

Die Beheizung der Prozesskammer kann auf unterschiedliche Weise erfolgen. Durchaus möglich ist es, die Prozesskammer induktiv zu erwärmen. Allerdings wird man aus Kostengründen eine indirekte Erwärmung vorziehen, und zwar durch Beheizen der Ofenwand. Gemäß einem Ausführungsbeispiel ist vorgesehen, die Ofenwand elektrisch zu erwärmen, und zwar durch Heizstrahler, die mit geringem Abstand zu der Retorte angeordnet sind oder außenseitig in diese integriert bzw. daran angeschlossen sind. Aufgrund unterschiedlicher Zusammensetzung von in einer Charge in der Prozesskammer thermisch aufzuschließender Energiespeicher mit unterschiedlichen Gehalten an ferromagnetischen Materialien, ist auch dieses ein Grund für eine unterschiedliche Erwärmung der in einer Charge aufzuschließenden Energiespeicher. Durch die durch dieses Verfahren bereitgestellte Wärmeübertragung zwischen den einzelnen Energiespeichern ist die erforderliche Prozesszeit auch deswegen kürzer, da diese kein Sicherheitszeitintervall enthalten muss. Dieses ist bei herkömmlichen Verfahren erforderlich, damit sichergestellt ist, dass jeder in einer solchen Charge enthaltene Energiespeicher pyrolytisch aufgeschlossen ist, also auch ein solcher, der nur einen geringen ferromagnetischen Anteil enthält. Durch die gegenseitige Erwärmung infolge der durch die vorhandene Atmosphäre möglichen Wärmeübertragung werden auch solche Energiespeicher in kurzer Zeit auf die gewünschte Erwärmungstemperatur gebracht, die nur eine relativ geringe Menge an ferromagnetischem Material oder sogar kein ferromagnetisches Material enthalten.

Der Druckanstieg während des zweiten Prozessschrittes beim thermischen Aufschließen der elektro-chemischen Energiespeicher hat darüber hinaus den Vorteil, dass die sich ausbildende Atmosphäre eine reduzierende Atmosphäre ist. Die für die Entstehung der reduzierenden Atmosphäre erforderlichen Stoffe entstehen bei der thermischen Behandlung aus den Energiespeichern. Mithin wird die reduzierende Atmosphäre durch die entstehenden Prozessgase selbst erzeugt, verbleiben jedoch in der Prozesskammer bis zu dem gewünschten Druckmaximum. Infolge der reduzierenden Atmosphäre ist Sorge dafür getragen, dass die in den Energiespeichern enthaltenen Metalle, wie Aluminium, Eisen, Nickel und Kobalt, jedenfalls mengenmäßig mehrheitlich keine Oxidverbindungen eingehen. Zumindest Eisen, Nickel und Kobalt können, wenn nicht als Oxide vorliegend, im Rahmen der nachgeschalteten Aufbereitung zum Separieren der Wertstofffraktionen auf einfache Weise im Wege einer Magnetabscheidung aus dem im Rahmen der Aufbereitung zerkleinerten Material separiert werden. Somit ist ein ansonsten in der nachgeschalteten Aufbereitung erforderlicher Prozessschritt des Aufschließens der Metalloxide nicht mehr oder nur noch für eine kleinere Fraktion der Metalle erforderlich, was sich kostensenkend auf den Recyclingprozess auswirkt. Vor dem Hintergrund, dass die zum Einstellen der reduzierenden Atmosphäre benötigten Gasbestandteile insgesamt, zumindest jedoch weitgehend durch die thermische Behandlung der Energiespeicher selbst erzeugt werden, kann über die Einstellung des aus der Prozesskammer des Ofens abgesaugten Volumenstroms der Grad der reduzierenden Atmosphäre über den Druck eingestellt werden. Sollten die durch die thermische Behandlung der Energiespeicher in der Prozesskammer entstehenden reduzierenden Gase nicht ausreichen, das gewünschte reduzierende Milieu einzustellen, kann ein Reduktionsmittel, typischerweise gasförmig, von außen in die Behandlungskammer eingebracht werden.

Die Umwälzung der die Atmosphäre bildenden Prozessgase innerhalb der Prozesskammer kann durch ein entsprechendes Umwälzaggregat, beispielsweise einen Lüfter oder dergleichen unterstützt werden. Dieses unterstützt die gegenseitige Erwärmung bzw. Kühlung der Energiespeicher durch Wärmeübertragung.

Von Besonderheit bei dem erfindungsgemäßen Verfahren ist, dass der thermische Aufschluss der Energiespeicher in zwei aufeinanderfolgenden Prozessschritten vorgenommen wird, wobei in dem ersten Prozessschritt die Energiespeicher auf ein Temperaturniveau gebracht werden, dass darin enthaltene Elektrolyte verdampfen und infolge des entstehenden Dampfdruckes die Energiespeicher geöffnet werden. Bei diesem ersten Prozessschritt werden die Energiespeicher auf eine Temperatur, typischerweise von etwa 160 bis 200 °C erwärmt. Infolge des bei diesem ersten Prozessschritt aufgebauten Unterdruckes, der typischerweise unter 10 mbar liegt, können die aus den Energiespeichern austretenden Elektrolytdämpfe über eine an die Prozesskammer angeschlossene Absaugung abgesaugt und durch Kondensation zurückgewonnen werden. Typischerweise wird man hierfür einen Vakuumkondensator einsetzen, vorzugsweise betrieben durch dieselbe Vakuumpumpe, mit der auch der in der Prozesskammer gewünschte Unterdruck erzeugt wird. Die erst bei weiterer Erwärmung in dem zweiten Prozessschritt entstehenden Zersetzungsprodukte, wie beispielsweise Kohlenwasserstoffe, können dann zumindest weitestgehend getrennt von den Elektrolyten zurückgewonnen werden. Vorteilhaft ist bei einer solchen Auslegung des Verfahrens, dass die gasförmigen Verdampfungs- und Zersetzungsprodukte der Energiespeicher nicht mehr oder weniger gleichzeitig, wie dieses bei vorbekannten Verfahren der Fall ist, sondern zeitlich nacheinander erzeugt und somit auch unabhängig voneinander einer Prozessabgasaufbereitung, insbesondere auch zum Zurückgewinnen von darin enthaltenen Bestandteilen zugeführt werden können. Bei dem in dem ersten Prozessschritt verdampfenden Elektrolytmaterial handelt es sich beispielsweise um Ethylmethylcarbonat, Ethylencarbonat und/oder Dimethylcarbonat.

Die thermische Behandlung wird vorzugsweise bis zu einer maximalen Erwärmungstemperatur durchgeführt, die unterhalb der Schmelztemperatur des niedrigstschmelzenden, in den Energiespeichern enthaltenen zurück zu gewinnenden Elements aus der Gruppe der Metalle und Übergangsmetalle liegt. Typischerweise ist Aluminium in derartigen Energiespeichern enthalten. Aus der Gruppe der zurück zu gewinnenden Metalle - Al, Ni, Fe, Co - ist Aluminium dasjenige Metall mit dem niedrigsten Schmelzpunkt. Daher wird man diese maximale Erwärmungstemperatur der elektro-chemischen Energiespeicher in der Behandlungskammer auf eine Temperatur beschränken, die unterhalb der Schmelztemperatur von Aluminium liegt. Bei einem Ausführungsbeispiel des Verfahrens werden die thermisch aufzuschließenden Energiespeicher nur auf eine Maximaltemperatur von etwa 600 °C gebracht.

In der Durchführung des Verfahrens ist vorgesehen, dass der Druckanstieg in der Prozesskammer während des zweiten Prozessschrittes kontrolliert wird, damit dieser kontinuierlich ansteigt. Dabei ist es zweckmäßig, wenn die Rate des Druckanstieges in einer ersten Phase des zweiten Prozessschrittes größer ist als in der oder den darauffolgenden Phasen. Typischerweise wird man den Druck in der Prozesskammer so kontrollieren, dass der Druckanstieg nach einer ersten Druckanstiegsphase im zweiten Prozessschritt asymptotisch an den gewünschten Druck herangebracht oder bis auf den Prozessdruck gebracht und auf diesem für eine gewisse Zeitdauer gehalten wird.

Eine an die Prozesskammer angeschlossene Prozessabgasreinigungsanlage kann einen Einspritzkondensator und einen diesem in Strömungsrichtung der Prozessabgase nachgeschalteten Vakuumkondensator umfassen. Der Vakuumkondensator dient zum Zurückgewinnen von in den Prozessabgasen enthaltenem Elektrolytmaterial. Der Einspritzkondensator dient einer Abgasreinigung, insbesondere um bei der thermischen Zersetzung entstehende Flusssäure (HF) aus dem Prozessabgas zu entfernen. Das Hintereinanderschalten des Einspritzkondensators und des Vakuumkondensators ist aufgrund der zweischrittigen Prozessführung möglich, bei der infolge der thermischen Behandlung der elektro-chemischen Energiespeicher in der Prozesskammer zunächst die Elektrolyte im ersten Prozessschritt verdampfen, während Flusssäuredämpfe erst im zweiten Prozessschritt mit der Zersetzung der weiteren Bestandteile, insbesondere der PVDF basierten Klebstoffe, mit denen die Kathodenmetalle auf der Aluminiumkathode aufgeklebt sind, entstehen. Um Elektrolyte aus dem Prozessabgasstrom zurückzugewinnen, wird während des ersten Prozessschrittes der Einspritzkondensator nicht betrieben. Eingeschaltet wird dieser erst, wenn aus dem Prozessabgas keine Elektrolyte mehr gewonnen werden sollen, und somit am Ende des ersten oder zu Beginn des zweiten Prozessschrittes. Im Abgasstrom dann noch enthaltene Elektrolyte werden über den Einspritzkondensator aus dem Abgasstrom entfernt. Bei einer solchen, an die Prozesskammer angeschlossenen Prozessabgasreinigungsanlage sind die Aggregate - Prozesskammer, Einspritzkondensator und Vakuumkondensator- in Reihe geschaltet. Zum Betrieb wird dann nur eine einzige Vakuumpumpe benötigt.

Nachfolgend ist die Erfindung unter Bezugnahme auf die beigefügten Figuren anhand eines Ausführungsbeispiels erläutert. Es zeigen:

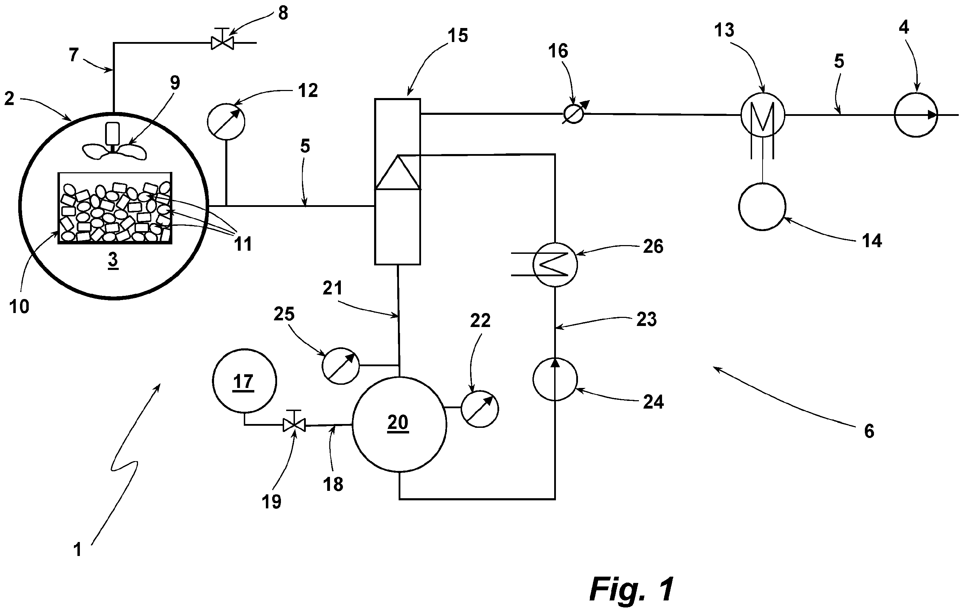

- **Fig. 1:**: Eine schematisierte Darstellung nach Art eines Blockschaltbildes einer thermischen Behandlungsanlage zum thermischen Aufschließen von elektro-chemischen Energiespeichern,
- **Fig. 2:**: ein Druck-Temperatur-Zeit-Diagramm zum Darstellen der Prozessführung des thermischen Aufschlusses der elektro-chemischen Energiespeicher in dem Vakuumofen der thermischen Behandlungsanlage der Figur 1 und
- **Fig. 3:**: ein Diagramm darstellend den Verdampfungsdruck abhängig von der Temperatur verschiedener, in elektro-chemischen Energiespeichern enthaltener Elektrolyte.

Eine thermische Behandlungsanlage 1 umfasst einen bei dem dargestellten Ausführungsbeispiel indirekt durch eine elektrische Heizeinrichtung beheizbaren Vakuumofen 2. Zum Betreiben des Vakuumofens 2, d.h.: zum Evakuieren seiner Prozesskammer 3, dient eine Vakuumpumpe 4. Diese ist über eine Saugleitung 5 an den Vakuumofen 2 angeschlossen. Eingeschaltet in die Saugleitung 5 ist eine insgesamt mit dem Bezugszeichen 6 kenntlich gemachte Prozessabgasaufbereitung, durch die das aus der Prozesskammer 3 des Vakuumofens 1 abgezogenen Prozessgase aufbereitet werden. Eingeschaltet in die Saugleitung 5 ist zudem der Prozessabgasaufbereitung 6 nachgeschaltet ein Druckregelventil 16. In die Prozesskammer 3 des Vakuumofens 2 mündet eine Inertgaszuführleitung 7, in die ein Ventil 8 zum Steuern einer Inertgaszufuhr in die Prozesskammer 3 hinein eingeschaltet ist. Das Ventil 8 ist elektrisch ansteuerbar. Das Ventil 8 ist in nicht näher dargestellter Weise an eine den Betrieb der thermischen Behandlungsanlage 1 steuernde Steuereinheit angeschlossen. Der Vakuumofen 2 verfügt über einen Lüfter 9 zum Umwälzen von in der Prozesskammer 3 bei dem thermischen Aufschluss von darin befindlichen Energiespeichern entstehenden Prozessgasen. Der Lüfter 9 befindet sich vorzugsweise hinter einer, beispielsweise durch ein Gitter bereitgestellten Verblendung der Prozesskammer 3. Bei dem dargestellten Ausführungsbeispiel befindet sich der Lüfter 9 im oberen Bereich der Prozesskammer 3. Der von dem Lüfter 9 generierte Gasstrom ist nach unten gerichtet. In der Prozesskammer 3 befindet sich eine nicht näher dargestellte Aufnahme zur Aufnahme eines eine Vielzahl an elektro-chemischen Energiespeichern, insbesondere Lithium-Ionen-Akkumulatoren - auch unterschiedlicher Art - enthaltenden Gebindes 10. Bei dem Gebinde 10 handelt es sich um eine sogenannte Gitterbox. Das Gebinde 10 des dargestellten Ausführungsbeispiels ist oberseitig offen, jedoch im Bereich seiner Seitenwände und seines Bodens geschlossen ausgeführt. Somit können infolge der thermischen Behandlung der Energiespeicher erzeugte bzw. daraus austretende Prozessgase nach oben hin entweichen. Durchaus möglich ist es auch, ein Gebinde mit gelochten Seitenwänden und/oder gelochtem Boden einzusetzen.

Die in dem Gebinde 10 enthaltenen Energiespeicher 11 stellen eine Charge an thermisch aufzuschließenden Energiespeichern 11 dar. In Fluidkommunikation mit der Prozesskammer 3 ist ein Druckmesssensor 12 zum Erfassen des in der Prozesskammer 3 herrschenden Druckes angeordnet. Bei dem dargestellten Ausführungsbeispiel ist der Druckmesssensor 12 an den ersten Abschnitt der Saugleitung 5 angeschlossen.

Zum thermischen Aufschließen einer Charge an elektro-chemischen Energiespeichern 11 werden diese in ein Gebinde 10 eingelegt und anschließend das Gebinde 10 mit den Energiespeichern 11 in die Prozesskammer 3 des Vakuumofens 2 eingestellt. Die in dem Gebinde 10 enthaltenen Energiespeicher 11 sind unterschiedlicher Bauart, weisen mithin eine unterschiedliche Restladung auf. Die Energiespeicher 4 sind nicht restentladen. Ist das Gebinde 10 mit seinen Energiespeichern 11 in die Prozesskammer 3 eingesetzt, wird der Vakuumofen 2 geschlossen.

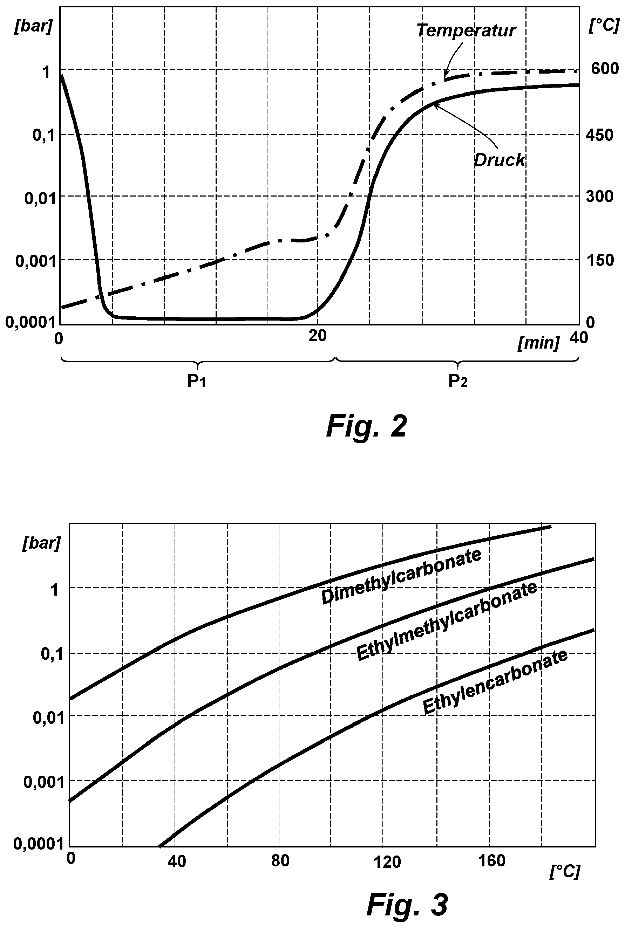

Anschließend wird die Prozesskammer 3 durch Betrieb der Vakuumpumpe 4 evakuiert. Während dieser Zeit sind die Aggregate der Prozessabgasaufbereitung 6 nicht in Betrieb. Zugleich werden die in dem Gebinde 10 enthaltenden Energiespeicher 11 erwärmt. Die Druckerniedrigung in der Prozesskammer 3 und der Temperaturanstieg der darin befindlichen Energiespeicher 11 ist in dem Diagramm der Figur 2 erkennbar. Mit der Evakuierung und dem Beginn des Prozesses der Erwärmung wird der erste Prozessschritt P₁ gestartet. In diesem ersten Prozessschritt P₁ wird der Druck soweit erniedrigt und die Energiespeicher 11 soweit erwärmt, dass die darin enthaltenen Elektrolyte - Ethylencarbonate, Dimethylcarbonate und Ethylmethylcarbonate verdampfen. Der Druck in der Prozesskammer 3 wird auf weniger als 10 mbar, etwa auf 5 bis 7 mbar abgesenkt. Den Unterdruck macht man sich zunutze, damit die in den Energiespeichern enthaltenen Elektrolyte bereits bei geringen Temperaturen und somit bereits bei einer geringen Erwärmung verdampfen. In dem Diagramm der Figur 3 sind beispielhaft die Verdampfungskurven der drei vorgenannten Elektrolyte dargestellt. Durch den auf diese Weise innerhalb der geschlossenen Energiespeicher 11 entstehenden Dampfdruck werden diese geöffnet. Je nach Ausgestaltung der Energiespeicher 11 erfolgt dieses durch Öffnen der Sicherheitsventile, der Poldeckel oder Gehäuse (bei Pouchzellen). Innerhalb der Prozesskammer 3 entstehen hierdurch die verdampften Elektrolyte in Dampfphase enthaltende Prozessabgase. Durch den Absaugbetrieb mittels der Vakuumpumpe 4 werden diese aus der Prozesskammer 3 über die Saugleitung 5 abgesaugt. Beginnend mit einer Temperatur, bei der die Elektrolyte zu verdampfen beginnen, wird ein in die Absaugleitung 5 eingeschalteter Vakuumkondensator 13 (Oberflächenkondensator) in Betrieb genommen, um in den Prozessabgasen enthaltene Elektrolyte zurückzugewinnen. Diese werden in einem an den Vakuumkondensator 13 angeschlossenen Elektrolytsammeltank 14 gesammelt. Um zu gewährleisten, dass sämtliche in dem Gebinde 10 enthaltene Energiespeicher 11 durch die Verdampfung von darin enthaltenen Elektrolyten geöffnet werden, wird am Ende des Prozessschrittes P₁ die Temperatur für eine kurze Zeit auf eine Temperatur gehalten, bei dem dargestellten Ausführungsbeispiel auf etwa 200°C. Durch die Temperaturhaltezeit ist Sorge dafür getragen, dass sämtliche in dem Gebinde 10 enthaltenen Energiespeicher 11 durch die Verdampfung der darin enthaltenen Elektrolyte geöffnet und der Elektrolyt verdampft ist. Die Temperaturhaltezeit kann eine vorgegebene Zeitspanne sein, ermittelt beispielsweise aus Untersuchungen. Auch kann über die Rückgewinnung der Elektrolyte an dem Vakuumkondensator 13 der Verdampfungsprozess der Elektrolyte in der Prozesskammer 3 über die kondensierte Elektrolytmenge pro Zeiteinheit kontrolliert werden. Dieses kann genutzt werden, um die Temperaturhaltezeit am Ende des ersten Prozessschrittes P₁ solange andauern zu lassen, bis die Elektrolytabscheiderate einen vorgegebenen unteren Grenzwert unterschreitet.

Der zweite Prozessschritt P₂ beginnt mit einer Temperaturerhöhung zur weiteren thermischen Behandlung der elektro-chemischen Energiespeicher 11 durch entsprechende Ansteuerung der Ofenheizung. Durch die weitere Erwärmung der Energiespeicher 11 werden die darin enthaltenen Separatoren zersetzt. Dies hat zur Folge, dass in den Energiespeichern 11 interne Kurzschlüsse stattfinden, wodurch die Energiespeicher 11 restentladen werden. Bemerkbar macht sich dieses in einem weiteren Temperaturanstieg innerhalb der Prozesskammer 3. Am Ende des Prozessschrittes P₁ oder zu Beginn des Prozessschrittes P₂ wird die Vakuumpumpe 4 abgeschaltet mit dem Ergebnis, dass sich innerhalb der Prozesskammer 3, wie in dem Diagramm der Figur 2 erkennbar, ein Druck aufbaut. Alternativ kann auch das Druckregelventil 16 geschlossen werden. Infolge dessen entsteht in der Prozesskammer 3 eine aus den Prozessgasen gebildete Atmosphäre. Diese ist aufgrund der chemischen Natur der an der Zusammensetzung der Prozessgase beteiligten Stoffe reduzierend. Der weitere pyrolytische Aufschluss der Energiespeicher 11 in reduzierender Atmosphäre wird bei diesem Verfahren gewünscht, damit die durch den Zersetzungsprozess frei werdenden Metalle möglichst keine oxidischen Verbindungen eingehen. Untersuchungen haben gezeigt, dass durch diese Maßnahme des pyrolytischen Aufschlusses in reduzierender Atmosphäre gegenüber anderen Aufschlussverfahren der Anteil an Metalloxiden in dem pyrolytisch aufgeschlossenen Material signifikant reduziert ist. Die Nicht-Oxid-Metallverbindungen lassen sich in der nachgeschalteten Aufbereitung zumindest mehrheitlich in einfacher Weise durch einen Magnetabscheider nach einem vorangegangenen Zerkleinerungsvorgang von dem aufgeschlossenen Material separieren.

Die Inertgaszuführleitung 7 ist bei dem dargestellten Ausführungsbeispiel nur aus Sicherheitsgründen vorgesehen, damit bei einer unerwartet heftigen Reaktion in der Prozesskammer 3 diese mit Inertgas geflutet werden kann.

Neben diesem Vorteil begünstigt die sich in der Prozesskammer 3 ausbildende Atmosphäre auch die gegenseitige Erwärmung der Energiespeicher 11 in dem Gebinde 10 infolge der in dem Gebinde 10 eintretenden Konvektion. Unterstützt wird eine Umwälzung der Prozessgase in dem Gebinde 10 durch einen Betrieb des Lüfters 9, der sich oberhalb der oberseitigen Öffnung des Gebindes 10 in der Prozesskammer 3 befindet und dessen Luftstrom in Richtung zu den Energiespeichern 11 gerichtet ist. Die durch die Wärme und bei dem dargestellten Ausführungsbeispiel auch durch den Betrieb des Lüfters 9 vorgesehene Umwälzung der Prozessgase wird als Wärmeträger genutzt, um die Erwärmung der einzelnen Energiespeicher 11 zu vergleichmäßigen. Je nach ihrem Erwärmungsgrad geben diese Wärme an die umgebende Prozessgasatmosphäre ab, wodurch denjenigen Energiespeichern 11 Wärme zugeführt wird, die eine geringere Temperatur als die Temperatur der Prozessgase haben. Dies erfolgt vor dem Hintergrund, dass die durch die Restentladung in jedem Energiespeicher 11 erzeugte Wärme unterschiedlich ist.

Bei dem dargestellten Ausführungsbeispiel wird der Druckanstieg kontrolliert, und zwar, dass dieser bei etwa 600 mbar endet. Um diesen Restunterdruck gegenüber dem Umgebungsdruck aufrechtzuerhalten, wird die Vakuumpumpe 4 entsprechend betrieben.

Der Temperaturanstieg wird kontrolliert, dass dieser eine Temperatur von etwa 600°C nicht überschreitet, und zwar vor dem Hintergrund, dass eine Aufschmelzung von Aluminium als das niedrigst schmelzendste Metall aus der Gruppe der zu recycelnden Sekundärrohstoffe nicht schmilzt. Bei der Beendigung des Prozessschrittes P₁ oder zu Beginn des Prozessschrittes P₂ wird der Vakuumkondensator 13 deaktiviert und ein in Strömungsrichtung der Prozessabgase dem Vakuumkondensator 13 vorgeschalteter Einspritzkondensator 15 aktiviert. Während des Prozessschrittes P₁ ist der Einspritzkondensator 15 deaktiviert, sodass die durch die Saugleitung 5 strömenden Prozessabgase unbeeinflusst durch diesen durch den Einspritzkondensator 15 hindurchgeleitet werden. Zwischen dem Einspritzkondensator 15 und dem Vakuumkondensator 13 befindet sich ein weiterer Druckmesssensor 16 zur Drucküberwachung in der Absaugleitung 5.

Der im zweiten Prozessschritt P₂ in Betrieb befindliche Einspritzkondensator 15 dient zum Reinigen der Prozessabgase, insbesondere zum Entfernen von darin in Dampfform enthaltener Flusssäure. Betrieben wird der Einspritzkondensator 15 mit einer Lauge, die in einem Laugentank 17 bevorratet ist. Bei dem dargestellten Ausführungsbeispiel wird als Lauge Natronlauge eingesetzt. Der Laugentank 17 ist über eine Leitung 18 unter Zwischenschaltung eines Ventils 19 an einen Sammeltank 20 angeschlossen, in den die im Einspritzkondensator 15 erzeugten Kondensate über eine Kondensatleitung 21 eingebracht werden. Der Sammeltank 20 ist mit einer Füllstandserfassung 22 ausgerüstet. Der Ausgang des Sammeltanks 20 ist über eine Einspritzleitung 23 an den Einspritzanschluss des Einspritzkondensators 15 angeschlossen. Zur Förderung der Lauge dient eine Pumpe 24. Über ein pH-Meter 25 wird der pH-Wert des aus dem Einspritzkondensator 15 austretenden Kondensates erfasst. Angeschlossen ist das pH-Meter an die Kondensatleitung 21. Entsprechend dem gemessenen pH-Wert des durch die Kondensatleitung 21 fließenden Kondensates wird Lauge aus dem Laugentank 17 in den Sammeltank 20 eingebracht, um die Flusssäure zu neutralisieren und um eine Einspritzflüssigkeit zu haben, die in etwa neutral ist.

Der Pumpe nachgeschaltet ist ein Wärmetauscher 26.

Die durch den Einspritzkondensator 15 gereinigten Abgase können dann, wenn erforderlich, einer thermischen Nachverbrennung zum Beseitigen von darin enthaltenem Kohlenwasserstoffen und der Crackprodukte der Separatoren zugeführt werden, die typischerweise aus PP oder PE gefertigt sind.

Wenn gewünscht, können auch in dem Prozessschritt P₂ Kohlenwasserstoffe aus dem Prozessabgasstrom entfernt werden.

Nach Beendigung des pyrolytischen Aufschlusses werden die aufgeschlossenen Energiespeicher 11 gekühlt und die Prozesskammer 3 belüftet, bevor diese geöffnet und das Gebinde 10 entfernt wird. Der Vakuumofen 2 kann anschließend mit der nächsten Charge an Energiespeichern zu deren pyrolytischen Aufschluss bestückt werden.

Mit der thermischen Behandlungsanlage 1 ist die Prozessdauer für den gewünschten pyrolytischen Aufschluss der Energiespeicher aufgrund der besonderen Druck-Temperaturführung innerhalb der Prozesskammer 3 des Vakuumofens 2 gegenüber herkömmlichen Verfahren um etwa 30% reduziert. Folglich ist der mit einem einzigen Vakuumofen 2 realisierbare Durchsatz entsprechend höher. Zudem ist durch die reduzierende Atmosphäre innerhalb der Prozesskammer 3 im zweiten Prozessschritt P₂ der Nicht-Metalloxidanteil in dem pyrolytisch aufgeschlossenen Material signifikant höher als bei herkömmlichen Verfahren, was sich vorteilhaft auf die nachgeschaltete Aufbereitung auswirkt. Dann können auf einfache Weise nach einer vorangehenden mechanischen Zerkleinerung die als Sekundärrohstoffe zurückzugewinnenden Metalle, die sich in einer Nicht-Oxid-Verbindung befinden und typischerweise ferromagnetische Eigenschaften haben, in einfacher und wirksamer Weise durch einen Magnetabscheider aus dem thermisch aufgeschlossenen Material separiert werden.

Die Erfindung ist anhand eines Ausführungsbeispiels beschrieben. Ohne den Umfang der geltenden Ansprüche zu verlassen, ergeben sich für einen Fachmann zahlreiche weitere Ausgestaltungen, die Erfindung umzusetzen, ohne dass dieses im Rahmen dieser Ausführungen im Einzelnen dargelegt werden müsste.

### Bezugszeichenliste

- 1: Thermische Behandlungsanlage
- 2: Vakuumofen
- 3: Prozesskammer
- 4: Vakuumpumpe
- 5: Saugleitung
- 6: Prozessabgasaufbereitung
- 7: Inertgaszuführleitung
- 8: Ventil
- 9: Lüfter
- 10: Gebinde
- 11: Energiespeicher
- 12: Druckmesssensor
- 13: Vakuumkondensator
- 14: Elektrolytsammeltank
- 15: Einspritzkondensator
- 16: Druckregelventil
- 17: Laugentank
- 18: Leitung
- 19: Ventil
- 20: Sammeltank
- 21: Kondensatleitung
- 22: Füllstandserfassung
- 23: Einspritzleitung
- 24: Pumpe
- 25: pH-Meter
- 26: Wärmetauscher

- P₁: Erster Prozessschritt
- P₂: Zweiter Prozessschritt

## Patentansprüche

1. Verfahren zum Aufschließen von elektro-chemischen Energiespeichern im Zusammenhang mit einem anschließenden Zurückgewinnen von darin enthaltenen Wertsoffen als Sekundärrohstoffe, bei welchem Verfahren die Energiespeicher (11) durch eine thermische Behandlung in einer Unterdruckumgebung in einer Prozesskammer (3) zum Entfernen des Elektrolyten und reaktiver Substanzen aufgeschlossen werden, bevor in einem nachgeschalteten Prozess das thermisch behandelte Material einer Aufbereitung unterworfen wird, durch die in dem thermisch behandelten Material befindliche Sekundärrohstoffe voneinander getrennt werden, **dadurch gekennzeichnet, dass** nach Einbringen einer Charge an thermisch aufzuschließenden Energiespeichern (11) in die Prozesskammer (3) in einem ersten Prozessschritt (P₁) die Prozesskammer (3) bei gleichzeitigem Erwärmen der Energiespeicher (11) auf ein erstes Temperaturniveau soweit evakuiert wird, dass in den Energiespeichern (11) enthaltene Elektrolyte verdampfen und in Folge des entstehenden Dampfdruckes die Energiespeicher (11) geöffnet werden, wobei entstehende, Elektrolyte in Dampfphase enthaltene Prozessgase aus der Prozesskammer (3) abgezogen werden, und dass im Anschluss an den ersten Prozessschritt (P₁) die Energiespeicher (11) für den weiteren Aufschluss bei gleichzeitigem Druckanstieg in der Prozesskammer (3) in reduzierender Atmosphäre auf ein zweites Temperaturniveau erwärmt werden, bevor die Prozesskammer (3) belüftet, gekühlt und die aufgeschlossenen Energiespeicher (11) entnommen werden, wobei der Druckanstieg in der Prozesskammer (3) während des zweiten Prozessschrittes (P₂) kontrolliert wird, damit dieser kontinuierlich ansteigt.

2. Verfahren nach Anspruch 1 oder 2, **dadurch gekennzeichnet, dass** die Rate des Druckanstieges zu Beginn des zweiten Prozessschrittes (P₂) größer ist als in den sich daran anschließenden Phasen dieses Prozessabschnittes (P₂).

3. Verfahren nach einem der Ansprüche 1 bis2, **dadurch gekennzeichnet, dass** in dem ersten Prozessschritt (P₁) die Prozesskammer (3) gegenüber dem Umgebungsdruck auf einen Unterdruck von weniger als 10 mbar evakuiert wird.

4. Verfahren nach einem der Ansprüche 1 bis2, **dadurch gekennzeichnet, dass** in dem ersten Prozessschritt (P₁) die in der Prozesskammer (3) enthaltenen Energiespeicher (11) auf eine Temperatur von etwa 160 bis 200°C erwärmt werden.

5. Verfahren nach einem der Ansprüche 1 bis4, **dadurch gekennzeichnet, dass** der Druck innerhalb der Prozesskammer (3) während des zweiten Prozessschrittes (P₂) kontrolliert wird, damit dieser einen Druck von 600 bis 700 mbar nicht überschreitet.

6. Verfahren nach einem der vorstehenden Ansprüche, **dadurch gekennzeichnet, dass** während des zweiten Prozessschrittes (P₂) Prozessgase innerhalb der Prozesskammer (3) aktiv umgewälzt werden.

7. Verfahren nach einem der vorstehenden Ansprüche, **dadurch gekennzeichnet, dass** die Temperatur innerhalb der Prozesskammer (3) kontrolliert wird, dass diese 600°C nicht überschreitet.

8. Verfahren nach einem der vorstehenden Ansprüche, **dadurch gekennzeichnet, dass** bei der thermischen Behandlung entstehende Prozessgase aus der Prozesskammer (3) abgesaugt werden.

9. Verfahren nach einem der vorstehenden Ansprüche, **dadurch gekennzeichnet, dass** die aus der Prozesskammer (3) abgezogenen Prozessgase über einen Einspritzkondensator (15) geleitet werden, durch den, wenn eingeschaltet, in den Prozessabgasen mitgeführte Schadstoffe aus den Prozessabgasen entfernt werden.

10. Verfahren nach einem der vorstehenden Ansprüche, **dadurch gekennzeichnet, dass** aus den während des ersten Prozessschrittes (P₁) aus der Prozesskammer (3) abgesaugten, Elektrolyte in Dampfphase enthaltenden Prozessgasen Elektrolyte zurückgewonnen werden.

11. Verfahren nach Anspruch 9 und 10, **dadurch gekennzeichnet, dass** Elektrolyte aus den während des ersten Prozessschrittes (P₁) aus der Prozesskammer (3) abgezogenen Prozessgasen mittels eines dem Einspritzkondensator (15) in Strömungsrichtung der Prozessabgase nachgeschalteten Vakuumkondensators (13) aus dem Prozessabgasstrom abgetrennt werden, wobei der Einspritzkondensator (15) während des ersten Prozessschrittes (P₁) sich nicht in seinem Kondensationsbetrieb befindet.

12. Thermische Behandlungsanlage zum Entfernen von Elektrolyten und reaktiver Substanzen in elektro-chemischen Energiespeichern (11), insbesondere zum Durchführen des Verfahrens nach einem der Ansprüche 1 bis 11, umfassend einen beheizbaren Vakuumofen (2) mit einer Einrichtung zum Umwälzen der bei einem Betrieb desselben zum thermischen Aufschließen von elektro-chemischen Energiespeichern (11) entstehenden Prozessgasen, an welchen Vakuumofen (2) eine Vakuumpumpe (4) zum Evakuieren der Prozesskammer (3) angeschlossen ist, und umfassend eine Prozessabgasaufbereitung (6) zum Reinigen der während des Betriebs des Vakuumofens (2) darin entstehenden Prozessabgase und/oder zum Zurückgewinnen von darin in Dampfphase befindlichen Aufschlussprodukten, **dadurch gekennzeichnet, dass** die Prozessabgasaufbereitung (6) einen Einspritzkondensator (15) und, diesem in Strömungsrichtung der Prozessabgase nachgeschaltet, ein Vakuumkondensator (13) vorgesehen ist.

13. Thermische Behandlungsanlage nach Anspruch 12, **dadurch gekennzeichnet, dass** die Prozessabgasaufbereitung (6) in Strömungsrichtung der Prozessabgase ausgehend von dem Vakuumofen (2) der Vakuumpumpe (4) vorgeschaltet ist.

## Claims

1. Method for decomposition of electrochemical energy storage devices in connection with a subsequent recovery of value substances contained therein as secondary raw materials, with which method the energy storage devices (11) are decomposed by a thermal treatment in a negative pressure environment in a process chamber (3) for removing the electrolytes and reactive substances, before the thermally treated material is subjected to processing in a downstream process, in which secondary raw materials present in the thermally treated material are separated from one another, **characterised in that,** after the introduction of a batch of thermally decomposing energy storage devices (11) into the process chamber (3) in a first process step (P₁), the process chamber (3) is evacuated to a first temperature level, with the simultaneous heating of the energy storage devices (11), to the extent that the electrolytes contained in the energy storage devices (11) evaporate, and, as a consequence of the vapour pressure incurred, the energy storage devices (11) are opened, wherein process gases which are incurred, containing electrolytes in the vapour phase, are drawn out of the process chamber (3), and that, following the first process stage (P₁), for the further decomposition and with a simultaneous pressure rise in the process chamber (3), the energy storage devices (11) are heated in a reducing atmosphere to a second temperature level, before the process chamber (3) is vented and cooled, and the decomposed energy storage devices (11) are removed, wherein the pressure rise in the process chamber (3) is monitored during the second process step (P₂) in order for it to rise continuously.

2. Method according to claim 1 or 2, **characterised in that** the rate of the pressure rise at the beginning of the second process step (P₂) is greater than in the subsequent phases of this process step (P₂).

3. Method according to any one of claims 1 to 2, **characterised in that** in the first process step (P₁) the process chamber (3) is evacuated in relation to ambient pressure to a negative pressure of less than 10 mbar.

4. Method according to any one of claims 1 to 2, **characterised in that** in the first process step (P₁) the energy storage devices (11) contained in the process chamber (3) are heated to a temperature of some 160 to 200 °C.

5. Method according to any one of claims 1 to 4, **characterised in that** the pressure inside the process chamber (3) is monitored during the second process step (P₂) in order to ensure that it does not exceed a pressure of 600 to 700 mbar.

6. Method according to any one of the preceding claims, **characterised in that,** during the second process step (P₂), process gases are actively circulated inside the process chamber (3).

7. Method according to any one of the preceding claims, **characterised in that** the temperature inside the process chamber (3) is monitored to ensure that it does not exceed 600 °C.

8. Method according to any one of the preceding claims, **characterised in that** process gases incurred during the thermal treatment are suctioned out of the process chamber (3).

9. Method according to any one of the preceding claims, **characterised in that** the process gases drawn out of the process chamber (3) are conveyed via an injection condenser (15), by means of which, when switched on, contaminant substances which are conveyed in the process outlet gases are removed from the process outlet gases.

10. Method according to any one of the preceding claims, **characterised in that,** from the electrolytes suctioned during the first process step (P₁) out of the process chamber (3), electrolytes contained in the vapour phase are recovered.

11. Method according to claims 9 and 10, **characterised in that** electrolytes from the process gases drawn out of the process chamber (3) during the first process step (P₁) are separated out of the process gas flow, by means of a vacuum condenser (13), downstream of the injection condenser (15) in the direction of flow of the process outlet gas, wherein, during the first process step (P₁), the injection condenser (15) is not in its condensation operation.

12. Thermal treatment system for removing electrolytes and reactive substances in electrochemical energy storage devices (11), in particular for carrying out the method according to any one of claims 1 to 11, comprising a heatable vacuum oven (2), with a device for circulating the process gases incurred during its operation for the thermal decomposition of electrochemical energy storage devices (11), connected to which vacuum oven (2) is a vacuum pump (4) for evacuating the process chamber (3), and comprising a process outlet gas treatment arrangement (6), for purifying the process outlet gases incurred in the vacuum oven (2) during its operation and/or for recovering decomposition products present in the vapour phase, **characterised in that** the process outlet gas treatment arrangement (6) is provided with an injection condenser (15) and, downstream of that in the direction of flow of the process outlet gases, a vacuum condenser (13).

13. Thermal treatment system according to claim 12, **characterised in that** the process outlet gas treatment arrangement (6) is arranged upstream of the vacuum pump (4) in the direction of flow of the process outlet gases going out from the vacuum oven (2).

## Revendications

1. Procédé de désagrégation d'accumulateurs électro-chimiques d'énergie associé à un processus ultérieur de recyclage des substances valorisables qui y sont contenues en tant que ressources secondaires, au cours duquel procédé les accumulateurs d'énergie (11) sont désagrégés par traitement thermique dans un sas de traitement (3), dans un environnement en pression négative, afin d'en retirer les électrolytes et les substances réactives avant de soumettre les matériaux traités thermiquement, au cours d'un processus ultérieur, à une préparation au cours de laquelle les ressources secondaires se trouvant dans les matériaux traités thermiquement sont séparés les unes des autres, **caractérisé en ce que,** après l'introduction d'une charge d'accumulateurs d'énergie (11) à désagréger thermiquement dans le sas de traitement (3), le sas de traitement (3) est, pendant une première étape de processus (P₁) où les accumulateurs d'énergie (11) sont simultanément chauffés, amené à un premier niveau de température au point de transformer les électrolytes contenus dans les accumulateurs d'énergie (11) en vapeur et qu'à la suite de la pression vapeur générée, les accumulateurs d'énergie (11) s'ouvrent, les gaz de traitement générés contenant des électrolytes en phase vapeur étant extraits du sas de traitement (3) et **en ce qu'**à la suite de la première étape de processus (P₁), les accumulateurs d'énergie (11) sont chauffés à un second niveau de température pour la suite de la désagrégation, avec une hausse simultanée de la pression dans le sas de traitement (3), dans une atmosphère réduite, avant de ventiler, refroidir le sas de traitement (3) et d'en retirer les accumulateurs d'énergie (11) désagrégés, la hausse de la pression dans le sas de traitement (3) étant contrôlée au cours de la seconde étape de processus (P₂) afin qu'elle augmente continuellement.

2. Procédé selon la revendication 1 ou 2, **caractérisé en ce que** le taux de hausse de pression au début de la seconde étape de processus (P₂) est plus grand qu'au cours des phases qui suivent cette étape de processus (P₂).

3. Procédé selon l'une des revendications 1 à 2, **caractérisé en ce qu'au** cours de la première étape de processus (P₁), le sas de traitement (3) est mis à un niveau de dépression de moins de 10 mbar par rapport à la pression ambiante.

4. Procédé selon l'une des revendications 1 à 2, **caractérisé en ce qu'au** cours de la première étape de processus (P₁), les accumulateurs d'énergie (3) contenus dans le sas de traitement (3) sont chauffés à une température d'environ 160 à 200 °C.

5. Procédé selon l'une des revendications 1 à 4, **caractérisé en ce que** la pression à l'intérieur du sas de traitement (3) est contrôlée pendant la seconde étape de processus (P₂) afin que celle-ci n'excède pas une pression de 600 à 700 mbar.

6. Procédé selon l'une des revendications précédentes, **caractérisé en ce qu'au** cours de la seconde étape de processus (P₂), les gaz de traitement à l'intérieur du sas de traitement (3) sont activement brassés.

7. Procédé selon l'une des revendications précédentes, **caractérisé en ce que** la température à l'intérieur du sas de traitement (3) est contrôlée afin que celle-ci n'excède pas 600 °C.

8. Procédé selon l'une des revendications précédentes, **caractérisé en ce que** les gaz de traitement générés lors du traitement thermique sont aspirés hors du sas de traitement (3).

9. Procédé selon l'une des revendications précédentes, **caractérisé en ce que** les gaz de traitement aspirés hors du sas de traitement (3) sont dirigés vers un condenseur à jet (15) par lequel, quand il est en service, les substances toxiques véhiculées par les gaz d'échappement de traitement sont extraites des gaz d'échappement de traitement.

10. Procédé selon l'une des revendications précédentes, **caractérisé en ce que** les électrolytes sont recyclés à partir des électrolytes contenus en phase vapeur dans les gaz de traitement aspirés hors du sas de traitement (3) au cours de la première étape de processus (P₁).

11. Procédé selon les revendications 9 et 10, **caractérisé en ce que** les électrolytes extraits des gaz de traitement aspirés hors du sas de traitement (3) au cours de la première étape du processus (P₁), sont séparés du flux des gaz d'échappement de traitement au moyen d'un condensateur à vide (13) monté, dans le sens de circulation du flux de gaz d'échappement de traitement, en aval du condensateur à jet (15), la fonction de condensation du condensateur à jet (15) n'étant pas en service pendant la première étape du processus (P₁).

12. Installation de traitement thermique destinée à retirer des électrolytes et des substances réactives contenus dans des accumulateurs d'énergie (11) électro-chimiques, notamment destinée à réaliser le procédé selon l'une des revendications 1 à 11, comprenant un four à vide (2) pouvant être chauffé, avec un équipement pour brasser les gaz de traitement générés lors de son fonctionnement afin de désagréger par traitement thermique des accumulateurs d'énergie (11) électro-chimiques, auquel four à vide (2) est raccordée une pompe à vide (4) destinée à mettre en dépression le sas de traitement (3) et comprenant un épurateur (6) des gaz d'échappement de traitement, afin de nettoyer les gaz d'échappement générés dans le four à vide (2) pendant son fonctionnement, et/ou afin de recycler les produits de désagrégation en phase vapeur contenus dans ces derniers, **caractérisée en ce que** l'épurateur (6) des gaz d'échappement de traitement comprend un condensateur à jet (15), et, en aval de celui-ci, dans le sens de circulation des gaz d'échappement de traitement, un condensateur à vide (13).

13. Installation de traitement thermique selon la revendication 12, **caractérisée en ce que** la pompe à vide (4), considérée dans le sens de circulation des gaz d'échappement de traitement en partant du four à vide (2), est montée en amont de l'épurateur (6) des gaz d'échappement de traitement.
